# EUROPEAN PATENT SPECIFICATION

(11) **EP 1 796 902 B1**
(45) Date of publication and mention of the grant of the patent: **28.06.2017**
(21) Application number: 05789697.9
(22) Date of filing: 04.10.2005
(51) Int. Cl.: B32B 27/32

(54) **FILM**
FILM
FILM

(30) Priority: 04.10.2004 GB 0421997; 29.04.2005 GB 0508856
(43) Date of publication of application: 20.06.2007
(73) Proprietor: Borealis Technology Oy, 06101 Porvoo (FI)
(72) Inventor: FOLLESTAD, Arild, N-3960 Stathelle (NO); JOHANSEN, Arno, N-3960 Stathelle (NO); SKAR, Merete, N-3960 Stathelle (NO); DAVIKSNES, Hans, Georg, N-3960 Stathelle (NO)
(74) Representative: Campbell, Neil Boyd
(86) International application number: PCT/EP2005/010669
(87) International publication number: WO 2006/037603

(56) References cited:
- WO-A-01/10643

## Description

This invention relates to a multilayer film with excellent optical and mechanical properties which can be formed into a container, e.g. a pouch, based on polyolefins which are easy to process. In particular, the invention concerns a multilayer film or pouch fashioned therefrom comprising a layer of multimodal polyethylene, e.g. bimodal linear low density polyethylene (LLDPE).

The polymer film manufacturer seeks films which have excellent optical properties, have good sealing properties and have excellent mechanical properties, e.g. high impact strength and stiffness. The polymers used to make the film must also have good processability, i.e. during the extrusion procedure the bubble formed must be stable and the extruded film should have an even film distribution thickness.

In recent years, multilayer films have been formed into standing pouches. The standing pouch market has grown rapidly as more and more retailers offer their products for sale in such pouches. Their use in the food and drinks industry in particular has become widespread. Such pouches generally replace blow moulded polyolefin bottles on the supermarket shelves so the retailer is expecting that the pouches he uses should have comparable properties to such bottles at lower cost.

These pouches are fabricated from multilayer polymer films which require certain properties to be effective. Thus, like the film producer, the pouch manufacturer seeks products which have excellent mechanical properties, e.g. high impact strength, tear strength, puncture resistance and stiffness. Stiffness is essential in order to allow pouches to stand without collapsing under their own weight. Stiffness is also essential to allow the end user to dispense the pouch contents by pouring without the pouch deforming under the pressure of the user's grip. Higher stiffness also allows an increase in the throughput in the pouch making machinery.

The film and hence walls of a pouch must be sealable in order to allow formation of the pouch from a film sheet. The film and pouch manufacturer is thus looking for products with good hot tack and broad sealing windows.

Moreover, as mentioned above the polyolefins used in the film and hence pouch construction must be readily processable, e.g. must be readily extrudable.

Unfortunately, the skilled man faces the problem that when improving one property, it seems inevitable that another property is adversely affected.

For example, low density polyethylene (LDPE) gives rise to films having good optical properties and can be processed at low temperatures and pressures whilst maintaining melt strength however films made from LDPE have low stiffness.

Conventional unimodal Ziegler-Natta produced linear low density polyethylenes (znLLDPE's) have excellent tear strength and impact properties but stiffness and impact remain poor and the films tend to be very hazy. Optical properties have been improved by using metallocene linear low density polyethylenes but at the expense of processabilty. These polymers exhibit poor bubble stability during film blowing.

Various blends of these materials have been proposed in the art to try to maximise film performance by combining the advantageous properties of certain polymers. Thus for example, LDPE and mLLDPE have been blended to form films however such films have poor stiffness. Medium density polyethylene made by metallocene catalysis has been blended with LDPE (EP-A-1108749) to form films. WO 01/10643A discloses a multilayered film comprising in the core layer a multimodal polyethylene and in the outer layers LLDPE and also discloses different kinds of LLPE used in the outer layers including VLDPE and ULDPE. The skilled polymer chemist still seeks therefore films and pouches made therefrom having excellent mechanical and processing properties, e.g. manifested by excellent bubble stability during extrusion. In addition, improved optical properties are desired, in particular in film applications.

The present inventors have surprisingly found that a multilayer film comprising at least three layers can fulfil these requirements. The film comprises two outer layers which are preferably identical and comprise a LLDPE component which should exhibit good hot tack and possess a broad sealing window, e.g. an mLLDPE component optionally blended with an LDPE component, whilst the core layer, i.e. a layer sandwiched between two outer layers, comprises a multimodal polyethylene preferably produced in a two stage process, e.g. a multimodal LLDPE, having a low density, high molecular weight component, optionally blended with mLLDPE or LDPE components.

Thus, viewed from one aspect, the invention provides a multilayer film comprising at least three layers, two outer layers and a core layer, each outer layer independently comprising an LLDPE and an LDPE component, e.g. at least 50%wt of LLDPE component, preferably having a density of less than 940 kg/m³ and said core layer comprising a multimodal polyethylene component of density 915 to 940 kg/m³ and having a lower molecular weight component and a higher molecular weight component, wherein the density of the higher molecular weight component is less than 915 kg/m³ and the MFR₂ of the higher molecular weight component is less than 1 g/10 min.

Viewed from another aspect the invention provides a process for the preparation of a multilayer film as hereinbefore described comprising coextruding a composition comprising a LLDPE and an LDPE component, preferably having a density of less than 940 kg/m³ to form two outer layers and a multimodal polyethylene component of density 915 to 940 kg/m³ and having a

lower molecular weight component and a higher molecular weight component, wherein the density of the higher molecular weight component is less than 915 kg/m³ and the MFR₂ of the higher molecular weight component is less than 1 g/10 min to form a core layer.

Viewed from another aspect the invention provides use of a multilayer film as hereinbefore described in packaging as well as an article packaged using said film.

Viewed from another aspect the invention provides a pouch formed from said multilayer film, preferably a standing pouch.

The multilayer film of the invention has at least three layers, e.g. 3, 5, 7 or 11 layers. Preferably however the film should comprise only three layers, two outer layers and a core layer and optionally a barrier layer as described more fully below. By core layer is meant a non outer layer, i.e. the core layer is not on the surface of the formed film.

The outer layers may have differing compositions although preferably the outer layers should be identical. At least one of the outer layers may act as a sealing layer to allow fabrication of articles from the film, e.g. pouches. The other outer layer may be laminated to a barrier layer. The outer layers may comprise at least 50 wt% of a LLDPE component having a density of less than 940 kg/m³. Preferably, the LLDPE is a unimodal, especially a mLLDPE (i.e. one produced using single site, e.g. metallocene catalysis), most especially a unimodal mLLDPE. By unimodal is meant that the molecular weight profile of the polymer comprises a single peak and is produced by one reactor and a single catalyst. Especially preferably, the outer layers comprise a unimodal mLLDPE component and an LDPE component.

LLDPE's should preferably form at least 60 %wt, more preferably at 75% by weight, e.g. at least 80% wt, especially at least 85% wt of each outer layer.

The LLDPE may have a density of less than 945 kg/m³, preferably less than 940 kg/m³, e.g. 905-940 kg/m³, preferably in the range of from 915 to 934 kg/m³, such as 918 to 934 kg/m³, e.g. 920 to 930 kg/m³ (ISO 1183).

The LLDPE of the outer layer is formed from ethylene along with at least one C₃₋₁₂ alpha-olefin comonomer, e.g. butene, hexene or octene. Preferably, the LLDPE is an ethylene hexene copolymer, ethylene octene copolymer or ethylene butene copolymer. The amount of comonomer incorporated is preferably 0.5 to 12 mol%, e.g. 2 to 10% mole relative to ethylene, especially 4 to 8% mole. Preferred comonomer contents may also be 1.5 to 10 wt%, especially 2 to 8 wt%.

The MFR₂ (melt flow rate ISO 1133 at 190°C under a load of 2.16 kg) of the LLDPE should preferably be in the range 0.5 to 10, preferably 0.8 to 6.0, e.g. 0.9 to 2.0 g/10min.

The LLDPE should preferably have a weight average molecular weight (Mw) of 100,000-250,000, e.g. 110,000-160,000 (GPC). The Mw/Mn value should preferably be 2 to 20, e.g. 2.5 to 4, especially 3.0 to 3.5 (GPC).

Ideally, the LLDPE is made by single site, e.g. metallocene catalysis and is therefore designated an mLLDPE. The use of metallocene catalysis to make LLDPE's is known and widely described in the literature.

It is within the scope of the invention for the LLDPE to be a multimodal LLDPE, e.g. a bimodal LLDPE, as described fully in connection with the core layer below. The possibility of using mixtures of LLDPE's is also covered, e.g. a unimodal LLDPE and a bimodal LLDPE.

Suitable LLDPE's are available commercially from Borealis and other suppliers.

Both outer layers of the multilayer film of the invention also contain an LDPE component. LDPE is a prepared using a well-known high pressure radical process as will be known to the skilled man and is a different polymer from an LLDPE.

The amount of LDPE present may range from 1 to 50% wt, e.g. 3 to 40 wt%, preferably 5 to 35% by weight, preferably 10 to 30 wt%, especially 15 to 20 wt% of the outer layer in question. Conveniently therefore the ratio LLPDE to LDPE in the outer layer is about 9:1.

The LDPE may have a density of 915-935 kg/m³, especially 920-930 kg/m³, e.g. 922 to 930 kg/m³. The MFR₂ of the LDPE may range from 0.3 to 4 g/10min, e.g. 0.5 to 2.5 g/10 min, e.g. 1.0 to 2.0 g/10 min. Suitable LDPE's are available commercially from Borealis and other suppliers.

Such an outer layer construction is believed to contribute to a low seal initiation temperature and excellent hot tack properties.

The outer layers may also contain other polymer components if necessary and may also contain minor amounts of conventional additives such as antioxidants, UV stabilisers, acid scavengers, nucleating agents, anti-blocking agents, slip agents etc as well as polymer processing agent (PPA). Polymer processing agents are available from commercial suppliers such as Dynamar and may include a fluoroelastomer component and can be added to the outer layer blend as part of a masterbatch as is known in the art.

A specific film may comprise a first outer layer comprising a unimodal LLDPE and LDPE blend with the other outer layer being formed from a multimodal LLDPE, optionally combined with an LDPE component.

The core layer of the film of the invention is one sandwiched between two outer layers. The core layer of the multilayer film of the invention comprises a multimodal polyethylene component having a lower molecular weight component and a higher molecular weight component, wherein the density of the higher molecular weight component is less than 915 kg/m³, preferably less than 905 kg/m³ and the MFR₂ of the higher molecular weight component is less than 1 g/10 min, e.g. a bimodal LLDPE, preferably a Ziegler-Natta bimodal LLDPE.

The invention thus provides a multilayer film comprising at least three layers, two outer layers and a core layer, each outer layer independently comprising an LLDPE and LDPE component and said core layer comprising a multimodal LLDPE component For example, therefore, the film might be a multilayer film comprising at least three layers, two outer layers and a core layer, each outer layer independently comprising a unimodal mLLDPE and LDPE and said core layer comprising a multimodal LLDPE.

It has been surprisingly found that the core layer polymer can provide the film with excellent mechanical and processing properties. Moreover, the mLLDPE component which may be used in the outer layers provides excellent optical properties. The outer layers also contribute to a low seal initiation temperature (110°C) and excellent hot tack properties.

The multimodal polyethylene can be the only polyolefin employed in the core layer and preferably the core layer should comprise at least 50% wt, e.g. at least 60% wt of the multimodal polyethylene. In addition, the core layer may comprise up to 50% wt, e.g. up to 40% wt, preferably up to 30% wt LDPE. Suitable LDPE's are those described above in connection with the outer layers of the multilayer film.

The core layer may alternatively comprise up to 25% wt, e.g. up to 20% wt of unimodal LLDPE, e.g. mLLDPE as described above.

The film as a whole should have a multimodal polyethylene content of between 30 and 40 wt%, e.g. about 35% wt.

The polyethylene component, e.g. LLDPE, in this core layer must be multimodal, preferably bimodal, i.e. its molecular weight profile does not comprise a single peak but instead comprises the combination of two or more peaks (which may or may not be distinguishable) centred about different average molecular weights as a result of the fact that the polymer comprises two or more separately produced components.

Multimodal polyethylenes are typically made in more than one reactor each having different conditions. The components are typically so different that they show more than one peak or shoulder in the diagram usually given as result of its GPC (gel permeation chromatograph) curve, where d(log(MW)) is plotted as ordinate vs log(MW), where MW is molecular weight.

Thus, the multimodal polyethylene comprises a higher molecular weight component which preferably corresponds to an ethylene copolymer (or terpolymer) of a higher alpha-olefin comonomer and a lower molecular weight component which preferably corresponds to an ethylene homopolymer or an ethylene copolymer (or terpolymer) of a lower alpha-olefin comonomer. Preferably the polyethylene in the core layer is formed from an ethylene homopolymer and an ethylene butene, ethylene octene or ethylene hexene copolymer.

Such multimodal polymers may be prepared for example by two or more stage polymerization or by the use of two or more different polymerization catalysts in a one stage polymerization. It is also possible to employ a dualsite catalyst. It is important to ensure that the higher and lower molecular weight components are intimately mixed prior to extrusion to form a film. This is most advantageously achieved by using a multistage process or a dual site but could be achieved through blending.

To maximise homogeneity, particularly when a blend is employed, it is preferred if the multimodal polyethylene used in the core layer is extruded prior to being extruded to form the film of the invention. This preextrusion step ensures that the higher molecular weight component will be homogeneously distributed though the core layer and minimises the possibility of gel formation in the film.

Preferably the multimodal polyethylene is produced in a two-stage polymerization using the same catalyst, e.g. a metallocene catalyst or preferably a Ziegler-Natta catalyst. Thus, two slurry reactors or two gas phase reactors could be employed. Preferably however, the multimodal polyethylene is made using a slurry polymerization in a loop reactor followed by a gas phase polymerization in a gas phase reactor.

A loop reactor - gas phase reactor system is marketed by Borealis A/S, Denmark as a BORSTAR reactor system. The multimodal polyethylene in the core layer is thus preferably formed in a two stage process comprising a first slurry loop polymerisation followed by gas phase polymerisation in the presence of a Ziegler-Natta catalyst.

The conditions used in such a process are well known. For slurry reactors, the reaction temperature will generally be in the range 60 to 110°C (e.g. 85-110°C), the reactor pressure will generally be in the range 5 to 80 bar (e.g. 50-65 bar), and the residence time will generally be in the range 0.3 to 5 hours (e.g. 0.5 to 2 hours). The diluent used will generally be an aliphatic hydrocarbon having a boiling point in the range -70 to +100°C. In such reactors, polymerization may if desired be effected under supercritical conditions. Slurry polymerisation may also be carried out in bulk where the reaction medium is formed from the monomer being polymerised.

For gas phase reactors, the reaction temperature used will generally be in the range 60 to 115°C (e.g. 70 to 110°C), the reactor pressure will generally be in the range 10 to 25 bar, and the residence time will generally be 1 to 8 hours. The gas used will commonly be a non-reactive gas such as nitrogen or low boiling point hydrocarbons such as propane together with monomer (e.g. ethylene).

Preferably, the lower molecular weight polymer fraction is produced in a continuously operating loop reactor where ethylene is polymerised in the presence of a polymerization catalyst as stated above and a chain transfer agent such as hydrogen. The diluent is typically an inert aliphatic hydrocarbon, preferably isobutane or propane.

The higher molecular weight component can then be formed in a gas phase reactor using the same catalyst.

The lower molecular weight component preferably has a MFR₂ of at least 50, preferably at least 100 g/10min, preferably 110 to 3000 g/10min, e.g. 110 to 500 g/10min, especially 150 to 400 g/10min. The molecular weight of the low molecular weight component should preferably range from 20,000 to 50,000, e.g. 25,000 to 40,000. Preferred molecular weight distribution values for the low molecular weight component range from 2 to 15, e.g. 3 to 12, preferably 5 to 8.

The density of the lower molecular weight component may range from 940 to 980 kg/m³, e.g. 945 to 975 kg/m³ preferably 950 to 970 kg/m³, especially 960 to 970 kg/m³.

The lower molecular weight component should preferably form 30 to 70 wt%, e.g. 40 to 60% by weight of the multimodal polyethylene with the higher molecular weight component forming 70 to 30 wt%, e.g. 40 to 60% by weight.

The higher molecular weight component should have a lower MFR2 and a lower density than the lower molecular weight component.

The higher molecular weight component should have an MFR₂ of less than 1 g/10 min, preferably less than 0.5 g/10 min, especially less than 0.2 g/10min, and a density of less than 915 kg/m³, e.g. less than 910 kg/m³, preferably less than 905 kg/m³. The Mw of the higher molecular weight component may range from 100,000 to 1,000,000, preferably 250,000 to 500,000.

Where the higher molecular weight component is made second in a multistage polymerisation it is not possible to measure its properties directly. However, the skilled man is able to determine the density, MFR₂ etc of the higher molecular weight component using Kim McAuley's equations. Thus, both density and MFR₂ can be found using K. K. McAuley and J. F. McGregor: On-line Inference of Polymer Properties in an Industrial Polyethylene Reactor, AIChE Journal, June 1991, Vol. 37, No, 6, pages 825-835.

The density is calculated from McAuley's equation 37, where final density and density after the first reactor is known.

MFR₂ is calculated from McAuley's equation 25, where final MFR₂ and MFR₂ after the first reactor is calculated.
The use of these equations to calculate polymer properties in multimodal polymers is common place.

The multimodal polyethylene overall may have a density of 915 to 940 kg/m³, preferably 915 to 935 kg/m³, preferably 920 to 930 kg/m³. The MFR₂ should be in the range 0.05 to 1.2 g/10min, e.g. 0.1-0.8 g/10min. The MFR₂₁ should be in the range 5 to 100, preferably 10 to 60 g/10min, e.g. 15 to 30 g/10 min. The Mw of the multimodal polyethylene should be in the range 150,000 to 300,000, preferably 230,000 to 270,000. Mw/Mn should be in the range 10 to 25, e.g. 15 to 25.

The comonomer used in the multimodal polyethylene is preferably a C₃₋₁₂ alpha olefin or a mixture of two or more C₃₋₁₂ alpha olefins, e.g. 1-butene, 1-pentene, 1-hexene, 4-methyl-1-pentene, 1-heptene, 1-octene, 1-nonene and 1-decene, with 1-butene and 1-hexene being preferred. The amount of comonomer incorporated is preferably 2 to 10% mole relative to ethylene, e.g. 2 to 8% mole, preferably 4 to 6 mol%. Preferred comonomer contents may also be 1.5 to 10 wt%, especially 2 to 8 wt%.

The multimodal polyethylene may be made using conventional single site or Ziegler-Natta catalysis as is known in the art. Conventional cocatalysts, supports/carriers, electron donors etc can be used. Many multimodal or bimodal LLDPE's are commercially available.

The core layer may also comprise other polymer components if necessary and conventional additives such as antioxidants, UV stabilisers, acid scavengers, nucleating agents, anti-blocking agents etc as well as polymer processing agent (PPA) as described above in connection with the outer layers. The amounts of PPA used may be the same as in the outer layer and can be added to the core layer blend as part of a masterbatch as is known in the art. The PPA is believed to act as a lubricant, migrating to the polymer surface during extrusion to prevent the extrudate sticking to the die.

The films of the invention may have a thickness of 10 to 250 microns, preferably 20 to 200 microns, e.g. 30 to 150 microns, such as e.g. 30 to 50 microns, preferably 80 to 135 microns. The outer layers and core layer may all be of equal thickness or alternatively the core layer may be thicker than each outer layer. A convenient film comprises two outer layers which each form 10 to 35%, e.g. 15 to 25% of the thickness of the film, the core layer forming the remaining thickness, e.g. 30 to 70%.

For film formation using a polymer mixture it is important that the different polymer components be intimately mixed prior to extrusion and blowing of the film as otherwise there is a risk of inhomogeneities, e.g. gels, appearing in the film. Thus, it is especially preferred to thoroughly blend the components, for example using a twin screw extruder, preferably a counter-rotating extruder prior to extrusion and film blowing. Sufficient homogeneity can also be obtained by selecting the screw design for the film extruder such that it is designed for good mixing and homogenising.

The film of the invention will typically be produced by extrusion through an annular die, blowing into a tubular film by forming a bubble which is collapsed between nip rollers after solidification. This film can then be slit, cut or converted (e.g. gusseted) as desired. Conventional film production techniques may be used in this regard. Typically the outer and core layer mixtures will be coextruded at a temperature in the range 160°C to 240°C, and cooled by blowing gas (generally air) at a temperature of 10 to 50°C to provide a frost line height of 1 or 2 to 8 times the diameter of the die. The blow up ratio should generally be in the range 1.5 to 4, e.g. 2 to 4, preferably 2.5 to 3.

The films of the invention exhibit high dart impact strengths and tear strengths, especially in the transverse direction. Thus for a 40 micron film of the invention, Dart drop F50 (ISO 7765/1) may be at least 180 g, preferably at least 250 g. Thus, Dart drop F50 (ISO 7765/1) may be at least 5 g/micron film thickness. Elmendorf Tear strength in the machine/transverse direction for a film of the invention may be at least 0.03N/micron (MD) and 0.15N/micron (TD) respectively (ISO 6382-2).
Elmendorf Tear resistances in the transverse direction for a 40 micron film may be at least 6.5 N.

1% Secant modulus properties (ASTM D882) in the machine/transverse direction should be at least 250 MPa/300MPa.

The films exhibit excellent haze properties, e.g. less than 10%, preferably less than 8% (ASTM D1003) for a 40 micron film whilst exhibiting high levels of gloss, e.g. >100 (ASTM D2457).

The films may have high tensile strength at yield in the transverse direction, e.g. at least 120 kg/cm², preferably at least 200 kg/cm². The films may also have high tensile strength at break in the machine/transverse direction, e.g. at least 250/220 kg/cm².

The films also possess a broad sealing window, e.g. greater than 10°C, preferably greater than 15°C, especially greater than 25°C.

The films of the invention may incorporate barrier layers as is known in the art. For food and medical applications for example, it may be necessary to incorporate a barrier layer, i.e. a layer which is impermeable to water and oxygen, into the film structure. This can be achieved using conventional lamination techniques. Suitable barrier layers are known and include polyamide, ethylene vinyl alcohol, PET and metallised Al layers.

Viewed from another aspect therefore the invention provides a laminate comprising a multilayer film as hereinbefore defined laminated onto a barrier layer.

In such an embodiment it may be convenient to laminate the barrier layer onto two 3-layer films as hereinbefore described thereby forming a 7 layer film in which the barrier layer forms the middle layer.

The outer layer to be laminated to the barrier layer can therefore be regarded as a lamination layer with the outer layer which remains outermost to be regarded as a sealing layer.

The films of the invention can also incorporate polypropylene layers.

The films of the invention have a wide variety of applications but are of particular interest in packaging of food and drink, consumer and industrial goods, medical devices and in heavy duty packaging. The films may act as shrink films and are thus suitable for shrink applications, e.g. to package goods for transportation.

Goods which may be packaged, especially in pouches therefore include detergents, soaps, fabric softeners, refill packets, fruit juices and especially oils and water. It is envisaged that packages may be from 100 g to 25 kg in size.

Pouches can be made from the films by known thermoforming processes. It is especially preferred if standing pouches are formed (i.e. self supporting pouches). Such pouches can be adapted to possess screw caps and the like to allow easy access to the contents of the pouch.

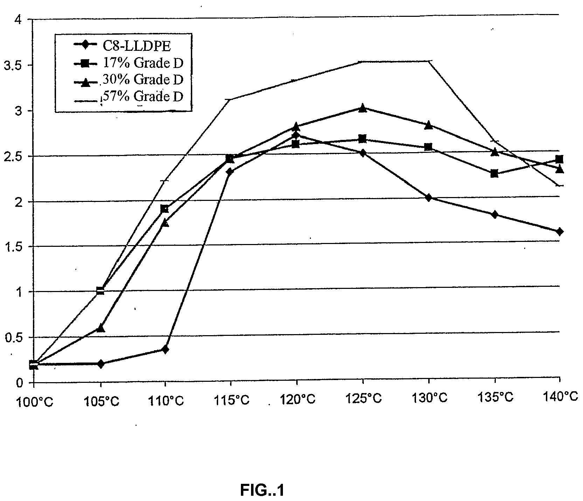

The invention will now be described further with reference to the following non-limiting examples and Figure. Figure 1 shows the hot tack tests results for films 12 to 14.

### Analytical Tests

Density is measured according to ISO 1183

MFR2/21 are measured according to ISO 1133 at 190°C at loads of 2.16 and 21.6 kg respectively.

Mw/Mn/MWD are measured by GPC.

Haze is measured according to ASTM D 1003

Gloss is measured according to ASTM D 2457

Elongation at break is measured by ASTM D 882

Tensile Strain at break and tensile strength are measured according to ISO 527-3

Sec modulus is measured according to ASTM D 882-A

Tensile stress at yield is measured according to ISO 527-3

Impact resistance is determined on Dart-drop (g/50%). Dart-drop is measured using ISO 7765-1, method "A". A dart with a 38 mm diameter hemispherical head is dropped from a height of 0.66 m onto a film clamped over a hole. If the specimen fails, the weight of the dart is reduced and if it does not fail the weight is increased. At least 20 specimens are tested. The weight resulting in failure of 50% of the specimens is calculated.

Puncture resistance (determined in Ball puncture (energy/J) at +23°C. The method is according to ASTM D 5748. Puncture properties (resistance, energy to break, penetration distance) are determined by the resistance of film to the penetration of a probe (19 mm diameter) at a given speed (250mm/min).

Tear resistance (determined as Elmendorf tear (N))
The tear strength is measured using the ISO 6383 method. The force required to propagate tearing across a film specimen is measured using a pendulum device. The pendulum swings under gravity through an arc, tearing the specimen from pre-cut slit. The specimen is fixed on one side by the pendulum and on the other side by a stationary clamp. The tear strength is the force required to tear the specimen.

Hot tack: Hot tack is a test method for measuring the seal strength of the film just after sealing while the seal is still hot. This property is measured on a DTC International Hot tack tester model 52-D, w-4236 according to an internal method. Samples are cut with a width of 15mm. The sealing time is 0.5sec, a delay time is 0,1sec and a sealing pressure of 90N. The sealing at different temperature is measured and for each test temperature 5 parallels are taken. The specimens have been conditioned in min- 24 hours before testing.

### Example 1

The following Commercially available Borealis grades were employed in Examples 1 and 2:

**Table 1 Grade Properties**

| Grade | Density | MFR2 | MFR21 |
|---|---|---|---|
| A - Unimodal mLLDPE FM5270 | 927 | 1.3 | |
| B - LDPE FT5270 | 927 | 0.75 | |
| C - Unimodal mLLDPE FM5220 | 922 | 1.3 | |
| D - Bimodal LLDPE FB2310 | 931 | 0.2 | 20 |
| E - Bimodal LLDPE FB2230 | 923 | 0.2 | 22 |
| G - Bimodal LLDPE FB 4370 | 937 | 0.4 | 40 |
| H - Bimodal LLDPE FB 4250T | 925 | 0.4 | 40 |
| J - Unimodal mLLDPE FM 5276 | 927 | 1.3 | |
| K - LDPE FA5246 | 927 | 0.75 | |

89%wt Grade A, 10%wt Grade B and 1% PPA (Dynamar FX-5922X - added as masterbatch) are blended in two film extruders. In addition 81%wt Grade D, 18%wt Grade A and 1% PPA (Dynamar FX-5922X) were blended in a film extruder. The film was coextruded on a 3-layer Windmöller&Möller coex.line with die diameter 200mm, at a blow up ratio of 2.5, frost line height 600 mm, Die gap 2.6 mm, Extruder temp setting : 210°C to form a 40 micron film.

Further 40 micron films 2 to 7 were prepared analogously.

### Film 1

Outer layers: 89% Grade A + 10% Grade B
Core layer: 81% Grade D + 18% Grade A

### Film 2

Outer Layers: 89% Grade C + 10% Grade B
Core Layer: 81% Grade D + 18% Grade C

### Film 3

Outer Layers: 89% Grade C + 10% Grade B
Core layer: 81% Grade D + 18% Grade C

### Film 4

Outer layers: 89% Grade A + 10% Grade B
Core layer: 100% Grade E

### Film 5

Outer layers: 80% Grade J + 20% K
Core layer: 80% Grade D + 20% Grade A

### Film 6

Outer layers: 80% Grade J + 20% Grade K
Core layer: 80% Grade G + 20% Grade A

### Film 7

Outer layers: 75% Grade A + 25% Grade B
Core layer: 100% Grade H

The films produced were tested and results presented in table 2 below.

**Table 2**

| Film | Unit | Film 1 | Film 2 | Film 3 | Film 4 |
|---|---|---|---|---|---|
| Layer Distribution | | 20/60/20 | 20/60/20 | 33/33/33 | 20/60/20 |
| DART DROP, F50 | g | 200 | 260 | 320 | 320 |
| Ball puncture 23°, TOTAL PENETRATION ENERGY | J | | 5,6 | | |
| Ball puncture 23°, MAX FORCE | N | | 88 | | |
| Ball puncture 23°, DEF.AT F.MAX | mm | | 105 | | |
| TEAR RESISTANCE, MD | N | 1,3 | 2,0 | 3,0 | 2,2 |
| TEAR RESISTANCE, TD | N | 8,2 | 8,6 | 7,0 | 7,6 |
| GLOSS, 60° | None | 121 | 132 | 132 | 112 |
| HAZE | % | 5,7 | 5,6 | 4,6 | 6,8 |
| TENSILE STRESS AT YIELD, TD | MPa | 17,4 | 15,6 | | |
| 1%(0.05-1.05)SECANT MODULUS, MD | MPa | 260 | 260 | | |
| 1%(0.05-1.05)SECANT MODULUS,TD | MPa | 375 | 320 | | |
| TENSILE STRENGTH , MD | MPa | 39 | | | |
| TENSILE STRENGTH, TD | MPa | 44 | | | |
| TENSILE STRAIN AT BREAK, MD | % | 450 | | | |
| TENSILE STRAIN AT BREAK, TD | % | 750 | | | |

| Film | Unit | Film 5 | Film 6 | Film 7 |
|---|---|---|---|---|
| Layer Distribution | | 25/50/25 | 25/50/25 | 25/50/25 |
| DART DROP, F50 | g | 230 | 200 | 180 |
| Ball puncture 23°, TOTAL PENETRATION ENERGY | J | 5.7 | 3.5 | 2.5 |
| Ball puncture 23°, MAX FORCE | N | 92 | 66 | 61 |
| Ball puncture 23°, DEF.AT F.MAX | mm | 103 | 87 | 60 |
| TEAR RESISTANCE, MD | N | 1.7 | 1.4 | 1.7 |
| TEAR RESISTANCE, TD | N | 8,9 | 8 | >6 |
| GLOSS, 60° | None | 120 | 120 | 116 |
| HAZE | % | 6.0 | 6.5 | 7.8 |
| 1%(0.05-1.05)SECANT MODULUS,TD | MPa | | | 320 |

### Example 2

The films of the invention have been compared qualitatively to films as described in Table 3 below.

**Table 3**

| | Comparative | Comparative monolayer | Comparative | Comparative | Invention |
|---|---|---|---|---|---|
| Outer layers | 100% LDPE monolayer | 100% Bimodal Z-N LLDPE | LDPE | mLLDPE | mLLDPE + LDPE |
| Middle Layer | - | - | Bimodal Z-N LLD/MD | Unimodal Z-N LLDPE | Bimodal Z-N LLDPE |
| Optical properties | + | .. | + | ++ | ++ |
| Dart-drop Puncture | .. | ++ | + | + | ++ |
| Bubble Stability | ++ | ++ | ++ | 0 | +(+) |
| Heat Sealing prop. | . | + | 0 | ++ | ++ |
| Balance: Stiffness/Impact | . | + | + | + | ++ |

| | | | | | |
|---|---|---|---|---|---|
| -- Very poor; - poor; 0 acceptable; + good; ++ very good | | | | | |

### Example 3

The following grades were employed in the manufacture of films in Examples 3 to 5:

**Table 4**

| Grade | Density | MFR2 |
|---|---|---|
| Siam 2045G (C8 LLDPE) | 920 | 1 |
| Cosmothene F210-6 (LDPE) | 922 | 2 |
| Grade D | 931 | 0.2 |
| C4-LLDPE (ex5) | 920 | 1.0 |
| C6-mLLDPE(ex5) | 918 | 1.1 |
| HDPE | 946 | 8* |

| | | |
|---|---|---|
| *MFR₂₁ | | |

Grade D is a bimodal polyethylene in which the lower molecular weight fraction has an MFR₂ of 400 g/10 min and a density of 970 kg/m³ and the higher molecular weight fraction has a MFR₂ of 0.037 g/10 min and a density of 902 kg/m³.

The following films were prepared by film blowing at BUR (Blow Up Ratio) 2.5:1, temperature profile 190-225°C and die lip of 2,2 mm:

| | |
|---|---|
| Film 8. | A: 25% - Sealing layer, 60/40 Siam 2045G/Cosmothene F210-6 |
| | B: 50% - 60/30/10 Grade D/ Cosmothene F210-6/ White Masterbatch |
| | C: 25% - Lamination side, as layer A. |
| | |
| Film 9. | A: 25% - Sealing layer, 60/40 Siam 2045G/Cosmothene F210-6 |
| | B: 45% - 60/30/10 Grade D/ Cosmothene F210-6/ White MB |
| | C: 30% - Lamination side, Grade D - 100%. |
| | |
| Film 10. | A: 33% - Sealing layer, 60/40 Siam 2045G/Cosmothene F210-6 |
| | B: 33% - 60/30/10 Grade D/ Cosmothene F210-6/ White MB |
| | C: 33% - Lamination side, as layer A. |

The films produced were tested and results presented in table 5 below.

**Table 5**

| **Test** | **Units** | Film 8 | Film 9 | Film 10 |
|---|---|---|---|---|
| Average Thickness | µm | 120 | 120 | 120 |
| Tensile strength at yield, TD | kg/cm² | 140 | 160 | 140 |
| Tensile strength at break, MD/TD | kg/cm² | 290 / > 260 | 330 / > 290 | 290 / > 270 |
| Elongation at break, MD/TD | % | 1300 / > 1600 | 1300 / > 1600 | 1300 / > 1600 |
| 1% Secant Modulus, MD/TD | kg/cm² | 2400 / 3100 | 3200 / 4100 | 2400 / 3000 |
| Dart Impact | g | 600 | 630 | 570 |
| Elmendorf Tear strength, MD/TD | g | 890 / 2600 | 790 / > 3200 | 1100 / 2600 |

### Example 4

Further films were produced under the same film blowing conditions as example 3 in which the sealing layer had the same composition in all films as in film 8 of Example 3, but the core layers varied.

Four films were produced:
Film 11 - The core layer formed 50% of the film thickness and consisted of 65% Siam 2045G, 25% HDPE (Table 4) and 10% white masterbatch (mb). Each outer layer was the same as sealing layer. (In total 0% Grade D). Each outside layer formed 25% of the film thickness.
Film 12 - The core layer formed 34% of the film thickness and consisted of 50% Grade D, 40% Cosmothene F-210-6 and 10% white MB. Outer layer same as sealing layer. Each outer layer formed 33% wt of the film thickness. (In total 17wt% Grade D).
Film 13 - The core layer formed 50% of the film thickness and consisted of 60% Grade D, 30% Cosmothene F-210-6 and 10% white MB. Outer layer same as sealing layer. Each outer layer formed 25%wt of the film thickness (In total 30wt% Grade D).
Film 14 - The core layer formed 45% of the film thickness and consisted of 60% Grade D, 30% Cosmothene F-210-6 and 10% white MB. The sealing layer (forming 30% of the film thickness) was as in film 8 but the outer layer (lamination side) was 100% Grade D and formed 25% of the film thickness (In total 57% Grade D).

The hot tack properties of these films are depicted in Figure 1. Higher Grade D content gives broader sealing range and higher seal strength.

### Example 5

Two further films were prepared using the film blowing conditions of example 3.
Comparative Film 15: Coex. LDPE (Cosmothene F210-6/C4-LLDPE/C6-mLLDPE
Film 16: Coex. Grade D/Grade D/C6-mLLDPE

**Table 6**

| **Test** | **Units** | Film 12 | Film 13 |
|---|---|---|---|
| Average Thickness | µm | 86 | 89 |
| Tensile strength at yield, TD | kg/cm² | 120 | 130 |
| Tensile strength at break, MD/TD | kg/cm² | 290/310 | 370/370 |
| Elongation at break, MD/TD | % | 1200 / 1400 | 990/1200 |
| 1% Secant Modulus, MD/TD | kg/cm² | 2100 / 2300 | 2700/3100 |
| Dart Impact | g | 410 | 800 |
| Elmendorf Tear strength, MD/TD | g | 530 / 1500 | 1100/1900 |

The films of the invention exhibit excellent stiffness, dart drop, tear strength, puncture resistance, sealability and processability. Conventional films do not possess all these properties.

Thus, whilst mLLDPE films have excellent dart drop, tear strength, puncture resistance and sealability they have poor processability and stiffness. LDPE films are not stiff, have poor dart drop and lack sealing properties. HDPE films have poor dart drop, tear strength, puncture resistance and sealability.

Even a laminate of HDPE/LLDPE+LDPE/mLLDPE exhibits poor dart drop and tear strength. The films of the invention also show better puncture resistance, sealability and processability than such a laminate film.

## Claims

1. A multilayer film comprising at least three layers, two outer layers and a core layer, each outer layer independently comprising an LLDPE and an LDPE component and said core layer comprising a multimodal polyethylene component having a lower molecular weight component and a higher molecular weight component, said multimodal polyethylene having a density of 915 to 940 kg/m³ wherein the density of the higher molecular weight component is less than 915 kg/m³ and the MFR₂ (measured according to ISO 1133 at 190 °C at a load of 2.16 kg) of the higher molecular weight component is less than 1 g/10 min.

2. A film as claimed in claim 1 wherein the LLDPE forms at least 50%wt of each outer layer and has a density of less than 940 kg/m³.

3. A film as claimed in claim 1 to 2 wherein the LLDPE of the outer layers is an mLLDPE.

4. A film as claimed in claim 3 wherein said mLLDPE is unimodal.

5. A film as claimed in any one of claims 1 to 4 wherein the core layer comprises a bimodal LLDPE.

6. A film as claimed in claim 5 wherein said bimodal LLDPE is made using Ziegler-Natta catalysis.

7. A film as claimed in claim 1 to 6 wherein said multimodal polyethylene is made in a two stage process.

8. A film as claimed in claim 7 wherein the multimodal polyethlyene is made in a two stage process comprising a slurry phase polymerisation followed by a gas phase polymerisation.

9. A film as claimed in any one of claims 1 to 8 wherein the core layer additionally comprises an LDPE component.

10. A film as claimed in any one of claims 1 to 9 wherein the core layer additionally comprises a unimodal mLLDPE component.

11. A film as claimed in any one of claims 1 to 10 wherein the multimodal polyethylene employed in the core layer comprises a higher molecular weight component being an ethylene copolymer and a lower molecular weight component being an ethylene homopolymer.

12. A film as claimed in claim 11 wherein said copolymer is an ethylene hexene or ethylene butene copolymer.

13. A film as claimed in any one of claims 1 to 12 comprising 3 layers.

14. A film as claimed in any one of claims 1 to 13 wherein the outer layers are identical.

15. A film as claimed in any one of claims 1 to 14 laminated onto a barrier layer.

16. A film as claimed in any one of claims 1 to 15 wherein the density of the higher molecular weight component is less than 910 kg/m³.

17. A pouch formed from a film of claims 1 to 16.

18. A pouch as claimed in claim 17 being a standing pouch.

19. A process for the preparation of a multilayer film as claimed in any one of claims 1 to 16 comprising coextruding a composition comprising a LLDPE and an LDPE component to form two outer layers and a multimodal polyethylene component having a lower molecular weight component and a higher molecular weight component and having a density of 915 to 940 kg/m³ wherein the density of the higher molecular weight component is less than 915 kg/m³ and the MFR₂ of the higher molecular weight component is less than 1 g/10 min, to form a core layer.

20. Use of a film as claimed in any one of claims 1 to 16 in packaging.

21. An article packaged with the film of claims 1 to 16.

## Patentansprüche

1. Mehrschichtige Folie, die mindestens drei Schichten umfasst, zwei äußere Schichten und eine Kernschicht, wobei jede äußere Schicht unabhängig eine LLDPE- und eine LDPE-Komponente umfasst und die Kernschicht eine multimodale Polyethylenkomponente umfasst, welche eine Komponente mit geringerem Molekulargewicht und eine Komponente mit höherem Molekulargewicht aufweist, wobei das multimodale Polyethylen eine Dichte von 915 bis 940 kg/m³ aufweist, wobei die Dichte von der Komponente mit höherem Molekulargewicht weniger als 915 kg/m³ beträgt und der MFR₂ (gemessen gemäß ISO 1133 bei 190 °C und einer Last von 2,16 kg) von der Komponente mit höherem Molekulargewicht weniger als 1 g/10 min beträgt.

2. Folie nach Anspruch 1, wobei das LLDPE mindestens 50 Gew.-% von jeder äußeren Schicht ausmacht und eine Dichte von weniger als 940 kg/m³ aufweist.

3. Folie nach Anspruch 1 bis 2, wobei das LLDPE der äußeren Schichten ein mLLDPE ist.

4. Folie nach Anspruch 3, wobei das mLLDPE unimodal ist.

5. Folie nach einem der Ansprüche 1 bis 4, wobei die Kernschicht ein bimodales LLDPE umfasst.

6. Folie nach Anspruch 5, wobei das bimodale LLDPE unter Verwendung einer Ziegler-Natter-Katalyse hergestellt wird.

7. Folie nach Anspruch 1 bis 6, wobei das multimodale Polyethylen in einem zweistufigen Verfahren hergestellt wird.

8. Folie nach Anspruch 7, wobei das multimodale Polyethylen in einem zweistufigen Verfahren hergestellt wird, das eine Slurry-Phase-Polymerisation umfasst, gefolgt von einer Gasphasenpolymerisation.

9. Folie nach einem der Ansprüche 1 bis 8, wobei die Kernschicht zusätzlich eine LDPE-Komponente umfasst.

10. Folie nach einem der Ansprüche 1 bis 9, wobei die Kernschicht zusätzlich eine unimodale mLLDPE-Komponente umfasst.

11. Folie nach einem der Ansprüche 1 bis 10, wobei das multimodale Polyethylen, das in der Kernschicht eingesetzt wird, eine Komponente mit höherem Molekulargewicht, welche ein Ethylencopolymer ist, und eine Komponente mit geringerem Molekulargewicht, welche ein Ethylenhomopolymer ist, umfasst.

12. Folie nach Anspruch 11, wobei das Copolymer ein Ethylen-Hexen- oder Ethylen-Buten-Copolymer ist.

13. Folie nach einem der Ansprüche 1 bis 12, die 3 Schichten umfasst.

14. Folie nach einem der Ansprüche 1 bis 13, wobei die äußeren Schichten identisch sind.

15. Folie nach einem der Ansprüche 1 bis 14, die auf eine Sperrschicht laminiert ist.

16. Folie nach einem der Ansprüche 1 bis 15, wobei die Dichte der Komponente mit höherem Molekulargewicht weniger als 910 kg/m³ beträgt.

17. Beutel, der aus einer Folie nach den Ansprüchen 1 bis 16 hergestellt ist.

18. Beutel nach Anspruch 17, welcher ein Standbeutel ist.

19. Verfahren zum Herstellen von einer mehrschichtigen Folie nach einem der Ansprüche 1 bis 16, umfassend das Coextrudieren von einer Zusammensetzung, die eine LLDPE- und eine LDPE-Komponente, um zwei äußere Schichten zu bilden, und eine multimodale Polyethylenkomponente umfasst, welche eine Komponente mit geringerem Molekulargewicht und eine Komponente mit höherem Molekulargewicht aufweist und eine Dichte von 915 bis 940 kg/m³ aufweist, wobei die Dichte von der Komponente mit höherem Molekulargewicht weniger als 915 kg/m³ beträgt und der MFR₂ von der Komponente mit höherem Molekulargewicht weniger als 1 g/10 min beträgt , um eine Kernschicht zu bilden.

20. Verwendung von einer Folie nach einem der Ansprüche 1 bis 16 zum Verpacken.

21. Artikel, der mit der Folie nach Anspruch 1 bis 16 verpackt ist.

## Revendications

1. Film multicouche comprenant au moins trois couches, deux couches externes et une couche centrale, chaque couche externe comprenant indépendamment un composant de LLDPE et un composant de LDPE et ladite couche centrale comprenant un composant de polyéthylène multimodal ayant un composant de poids moléculaire inférieur et un composant de poids moléculaire supérieur, ledit polyéthylène multimodal ayant un poids spécifique de 915 à 940 kg/m³, dans lequel le poids spécifique du composant de poids moléculaire supérieur est inférieur à 915 kg/m³ et la MFR₂ (mesurée selon la norme ISO 1133 à 190 °C sous une charge de 2,16 kg) du composant de poids moléculaire supérieur est inférieure à 1 g/10 min.

2. Film selon la revendication 1, dans lequel le LLDPE forme au moins 50 % en poids de chaque couche externe et a un poids spécifique inférieur à 940 kg/m³.

3. Film selon la revendication 1 à 2, dans lequel le LLDPE des couches externes est un LLDPEm.

4. Film selon la revendication 3, dans lequel ledit LLDPEm est unimodal.

5. Film selon l'une quelconque des revendications 1 à 4, dans lequel la couche centrale comprend un LLDPE bimodal.

6. Film selon la revendication 5, dans lequel ledit LLDPE bimodal est fabriqué en utilisant une catalyse de Ziegler-Natta.

7. Film selon les revendications 1 à 6, dans lequel ledit polyéthylène multimodal est fabriqué dans un procédé à deux stades.

8. Film selon la revendication 7, dans lequel le polyéthylène multimodal est fabriqué dans un procédé à deux stades comprenant une polymérisation en phase de suspension suivie d'une polymérisation en phase gazeuse.

9. Film selon l'une quelconque des revendications 1 à 8, dans lequel la couche centrale comprend en outre un composant de LDPE.

10. Film selon l'une quelconque des revendications 1 à 9, dans lequel la couche centrale comprend en outre un composant de LLDPEm unimodal.

11. Film selon l'une quelconque des revendications 1 à 10, dans lequel le polyéthylène multimodal employé dans la couche centrale comprend un composant de poids moléculaire supérieur qui est un copolymère d'éthylène et un composant de poids moléculaire inférieur qui est un homopolymère d'éthylène.

12. Film selon la revendication 11, dans lequel ledit copolymère est un copolymère d'éthylène-hexène ou d'éthylène-butène.

13. Film selon l'une quelconque des revendications 1 à 12, comprenant 3 couches.

14. Film selon l'une quelconque des revendications 1 à 13, dans lequel les couches externes sont identiques.

15. Film selon l'une quelconque des revendications 1 à 14, laminé sur une couche barrière.

16. Film selon l'une quelconque des revendications 1 à 15, dans lequel le poids spécifique du composant de poids moléculaire supérieur est inférieur à 910 kg/m³.

17. Sac formé d'un film selon la revendication 1 à 16.

18. Sac selon la revendication 17, qui est un sac vertical.

19. Procédé de préparation d'un film multicouche selon l'une quelconque des revendications 1 à 16, comprenant la co-extrusion d'une composition comprenant un composant de LLDPE et un composant de LDPE pour former deux couches externes et un composant de polyéthylène multimodal ayant un composant de poids moléculaire inférieur et un composant de poids moléculaire supérieur et ayant un poids spécifique de 915 à 940 kg/m³, dans lequel le poids spécifique du composant de poids moléculaire supérieur est inférieur à 915 kg/m³ et la MFR₂ du composant de poids moléculaire supérieur est inférieure à 1 g/10 min pour former une couche centrale.

20. Utilisation d'un film selon l'une quelconque des revendications 1 à 16 en emballage.

21. Article emballé avec le film des revendications 1 à 16.
